# EUROPÄISCHE PATENTANMELDUNG

(11) **EP 0 626 741 A2**
(43) Veröffentlichungstag der Anmeldung: **30.11.1994**
(21) Anmeldenummer: 94105437.1
(22) Anmeldetag: 08.04.1994
(51) Int. Cl.: H02G 15/10, H02G 15/113

(54) **Muffenverbindung**

(30) Priorität: 20.04.1993 DE 9305892 U; 31.07.1993 DE 9311450 U; 21.10.1993 DE 9316027 U
(71) Anmelder: SeaCom AG, CH-8184 Bachenbülach (CH)
(72) Erfinder: Baumgartner, Max, Dr. oec. publ., CH-8027 Zürich (CH)
(74) Vertreter: Hunziker, Jean

(57) **Zusammenfassung**

Es ist eine Muffenverbindung eines Durchgangkabels beschrieben, mit einem Abzweigkabel, einem Verbindungselement, das auf einem abgemantelten Abschnitt des Durchgangskabels sitzt und dessen Leiter kontaktiert und an welches das Abzweigkabel angeschlossen ist. Eine oder zwei Schellen (1), die auf einem ummantelten Abschnitt des Durchgangskabels seitlich des Verbindungselementes angeordnet sind fixieren Durchgangskabel sowie Abzweigkabel in ihrer gegenseitigen Lage. Durchgangskabel, Verbindungselement, Abzweigkabel und Schelle (1, 16) bilden eine vormontierte Einheit, die nach Erstellung mit einer Umhüllung (31) umhüllt wird und eine Schalung für eine in den Hohlraum der Umhüllung eingegossene Vergussmasse bildet.

Dadurch wird erreicht, dass die Kabelverbindung bereits ohne Umhüllung und ausgehärtete Vergussmasse sicher zentrisch fixierbar ist und es wird ausserdem die Montage erleichtert.

## Beschreibung

Gegenstand der Erfindung ist eine Muffenverbindung eines Durchgangskabels mit einem Abzweigkabel nach dem Oberbegriff des Anspruchs 1.

Bei bereits bekannten Muffenverbindungen sitzt bei einer Abzweigung ein Verbindungselement, meist ein Klemmring, auf einem abgemantelten Teil eines Durchgangskabels. Dieses Verbindungselement kontaktiert die Seelen des Durchgangskabels mit Zähnen oder Frässchrauben, die durch die Kabelisolation greifen. Das elektrisch an das Verbindungselement angeschlossene Abzweigkabel wird parallel zu einem Abschnitt des Durchgangskabels von einer Seite des Klemmrings weggeführt. Zum Schutz und zur Isolation der Verbindung wird diese in eine Umhüllung beispielsweise in ein Muffengehäuse oder einen Schrumpfschlauch eingeschlossen. Muffengehäuse haben üblicherweise Röhrenform mit einer Verbreiterung im Klemmringbereich. Sie sind in der Regel zweiteilig (AT-PS 304 669). Die Gehäusehälften können an einer Längskante mittels eines Scharniers verbunden sein und eine Klemmverbindung an der gegenüberliegenden Längskante aufweisen. Bei einer einfachen Konstruktion sind an den Stirnseiten des Gehäuses Dichtungen angeordnet, die sich beim Herumlegen des Muffengehäuses um die Verbindungsstelle dichtend gegen die aus der Muffe herausführenden, ummantelten Kabelabschnitte legen. Abschliessend werden die Hohlräume des Muffengehäuses mit einer Vergussmasse gefüllt, die nach dem Aushärten die Isolation und den Schutz der Verbindung sicherstellt.

Die Montage solcher Muffenverbindungen ist problematisch. Gewöhnlich müssen sie von einem allein arbeitenden Monteur ausgeführt werden. Dieser muss nach dem Anlegen des Verbindungselementes das Muffengehäuse und die Dichtungen so aufeinander ausrichten, dass das Verbindungselement und die Kabelabschnitte in einem ausreichenden Abstand vom Muffengehäuse gehalten sind. Bei Längenabmessungen des Muffengehäuses von typischerweise 0,2 bis 1 m und der Biegsamkeit der dicken Kabel kann dies Schwierigkeiten bereiten. Ausserdem ist nachteilig, dass die Vergussmasse eine gewisse Aushärtezeit hat, während der die Muffe und die herausgeführten Kabelabschnitte nicht bewegt werden dürfen. Die weichen Abdichtungen, die in der Regel aus Schaumstoffen bestehen, können nämlich nicht verhindern, dass sich eine Bewegung auf die Lage der Verbindung relativ zum Gehäuse auswirkt. Auf einer Baustelle lässt sich jedoch schwer vermeiden, dass Muffe bzw. Kabel während der Aushärtezeit bewegt oder belastet werden. Die Folge kann sein, dass die Muffenverbindung den Festigkeits- bzw. Isolationsanforderungen nicht genügt.

Bei einer aufwendigeren Konstruktion der eingangs genannten Art sind in einem starren Muffengehäuse Schellen fest angeordnet. Diese werden seitlich des Verbindungselements auf ummantelten Abschnitten des Durchgangskabels bzw. Abzweigkabels fixiert, so dass sie relativ starr mit den Kabeln verbunden sind. Die Schellen haben jeweils zwei Hälften, die nach dem Erstellen der Verbindung um die Kabel herumgelegt werden. Da jedoch die Schellen fest mit den Hälften des Muffengehäuses verbunden sind, hat dies gleichzeitig mit dem Anbringen des Gehäuses und dem Plazieren der Dichtelemente zu geschehen. Die Montage dieser Muffenverbindung weist also die oben erwähnten Schwierigkeiten auf. Selbst wenn ein transparentes Muffengehäuse eine Kontrolle der Position des Verbindungselementes nach dem Schliessen des Gehäuses ermöglicht, ist die Installation dieser Muffen zeitaufwendig und erfordert einiges Geschick. Bei der Neuanbringung von Muffen bzw. beim Sanieren von Altnetzen werden deshalb nur geringe Montagegeschwindigkeiten erreicht. Ist die Muffe korrekt vormontiert, sind allerdings aufgrund der Schellen keine Fehlausrichtungen während der Aushärtezeit des Giessharzes mehr zu befürchten.

Ein weiterer wichtiger Gesichtspunkt ist die Stabilität der Muffenverbindung. Bei Verwendung eines relativ starren und mit den Schellen verbundenen Gehäuses wird die Stabilität durch das Gehäuse sichergestellt. Dabei kann es sich um ein gegossenes Metallgehäuse oder um ein gespritztes oder gepresstes Kunststoffgehäuse handeln. Die Vergussmasse hat dann im wesentlichen eine Isolationsfunktion. Als Materialien kommen Bitumen oder Giessstoffe aus Kunststoff in Betracht.

Andererseits werden auch verhältnismässig weiche Gehäuse eingesetzt und mit einer starr aushärtenden Vergussmasse gefüllt. Das Gehäuse übernimmt dann die Funktion einer Schalung für die Vergussmasse und die Vergussmasse bewirkt ausser der Isolation die Stabilität. Hier kommen als Vergussstoffe vor allem starr aushärtende Giessharze in Betracht.

Starre Muffengehäuse sind verhältnismässig kostenaufwendig. Im Falle einer Reparatur ist das Entfernen der Vergussmasse arbeitsintensiv. Weiche Muffengehäuse sind demgegenüber zwar kostengünstiger. Ihre Füllung ist jedoch verhältnismässig teuer und verhindert eine spätere Oeffnung zu Reparaturzwecken. Giessharze haben zudem den Nachteil, dass sie den Verarbeiter bei der Konfektionierung gesundheitsgefährdenden Bedingungen aussetzen können. Deshalb wird der Ersatz durch arbeitsmedizinisch und ökologisch unbedenklichere Isolationsstoffe angestrebt. Diese Materialien ermöglichen bislang noch kein weiches Muffengehäuse und setzen ein starres Muffengehäuse mit den oben erwähnten Nachteilen voraus.

Die bekannten Schellensicherungen für die Kabel weisen noch einen weiteren Nachteil auf. Grundsätzlich sollten derartige Muffenverbindungen nämlich für die Verbindung von Kabeln verschiedener Querschnittsabmessungen einsetzbar sein. Die Dichtungen müssen entsprechend den verschiedenen Kabeldurchmessern variabel sein. Bei bekannten Schellen werden verschiedene Kabeldurchmesser mittels einer Stellschraubeneinrichtung ausgeglichen, die in einer Gewindebohrung der einen Schellenhälfte geführt sind und gegen eine Seite des Kabels drücken, das sich andererseits an der anderen Schellenhälfte abstützt. Je nachdem, welcher Kabelquerschnitt in die Schelle eingesetzt wird, wandert das Kabel aus der Teilungsebene der Schelle aus. Das kann zu einem mangelhaften Sitz der Kabel in den Abdichtungen führen, da diese keine entsprechenden Ausgleichsmögichkeiten aufweisen. Ueberdies werden hierdurch Fehlausrichtungen des Verbindungselementes begünstigt, die grundsätzlich einen Ausgleich durch grosse Gehäusevolumina erfordern, damit die vorgeschriebenen Seitenabstände eingehalten werden. Gesteigert werden diese Effekte dadurch, dass das Durchgangs- und das Abzweigkabel in unterschiedlichem Masse aus der Schellen-Teilungsebene auswandern können.

Davon ausgehend liegt der Erfindung die Aufgabe zugrunde, eine Muffenverbindung der eingangs genannten Gattung so zu verbessern, dass die Kabelverbindung bereits ohne Umhüllung und ausgehärtete Vergussmasse sicher fixierbar ist, und die ausserdem auch wesentlich montagefreundlicher ist.

Die Lösung der Aufgabe ist im kennzeichnenden Teil des Anspruchs 1 angegeben.

Bei der erfindungsgemässen Muffenverbindung ist die Schelle bzw. sind die Schellen zu Beginn der Montage noch von der Umhüllung, z.B. einem Muffengehäuse getrennt. Sie wird bzw. sie werden zunächst auf einen ummantelten Kabelabschnitt seitlich des vorgängig gesetzten Verbindungselementes gesetzt und korrekt ausgerichtet. Ihre radiale und axiale Positionierung kann sehr genau erfolgen, weil die Ausrichtung ohne Behinderung durch eine Umhüllung erfolgen kann. Auch das Abzweigkabel lässt sich leicht und ohne Behinderung durch eine Umhüllung in die gewünschte Ausrichtung zum Durchgangskabel bringen. Um die so vormontierte Einheit aus Durchgangskabel, Verbindungselement, Abzweigkabel und Schelle bzw. Schellen lässt sich dann einfach eine Umhüllung setzen, weil sie keiner weiteren Ausrichtung des Verbindungselementes und der Schelle oder den Schellen zu den Kabeln mehr bedarf. Beim Anbringen der Umhüllung werden beispielsweise zwei relativ starre Schalen miteinander verbunden, wobei Dichtungen in das Gehäuse integriert sein können.

Bei einer bevorzugten Ausgestaltung sind zwei Schellen an verschiedenen Seiten des Verbindungselementes vorgesehen, die über ein starres Verbindungsteil miteinander verbunden und auf Abstand gehalten sind. Bei dem Verbindungsteil handelt es sich vorzugsweise um einen Bügel, der seitlich am Verbindungselement vorbeigeführt ist. Die Verbindungsteile können lösbar mit den Schellen verbunden sein. Nach dem Anbringen des Verbindungselementes und dem Anschliessen eines Abzweigkabels können die Schellen auf den ummantelten Abschnitt gesetzt werden. Zuvor oder danach wird das Verbindungsteil angebracht, wodurch die Schellen in einem durch den Bügel gegebenen bestimmten Abstand voneinander und in korrekter Ausrichtung stabil zueinander gehalten werden. Wenn die Schellen mittels geeigneter Klemmeinrichtungen auf den Kabeln fixiert sind, ist die dazwischenliegende Verbindung vor relativen Bewegungen der herausgeführten Kabelabschnitte geschützt. Sollte das Verbindungsteil das Kontaktieren des Klemmrings mit den Leitern des Durchgangskabels behindern, kann dieses problemlos entfernt werden. Somit ist ein sicheres, behinderungsfreies Anziehen des Verbindungsteils gewährleistet. Die Verbindungsteile können der jeweiligen Kabelgrösse und der davon abhängigen Muffengrösse angepasst zum Einsatz gebracht werden.

Die genau festgelegte Anordnung der Schellen mit Hilfe des jeweiligen Verbindungsteiles erleichtert die Montage einer Muffenverbindung erheblich. Ohne besonderes Geschick kann eine Umhüllung um die Verbindungsstelle gelegt und geschlossen werden. Die Stabilität der Muffenverbindung wird durch die vormontierte Einheit mit dem Verbindungsteil gewährleistet. Deshalb besteht weitgehende Freiheit in der Materialwahl von Umhüllung und Vergussmasse. Die Umhüllung kann also auch aus einem kostengünstigen flexiblen Material hergestellt sein und bei der Vergussmasse kann es sich um ein ebenfalls verhältnismässig kostengünstiges Material mit gewünschten Fliess- und Aushärteigenschaften, günstiger Entfernbarkeit und geringen Gefahrenmomenten für Mensch und Umwelt handeln.

Falls die Dichtungen mit einem Muffengehäuse verbunden sind, werden die in ihrer Lage fixierten Kabel automatisch korrekt in die Dichtungen eingeführt.

Dies ist auch der Fall, wenn die Dichtungen in die Umhüllung oder die Schellen integriert sind. Damit wäre die Verbindung danach korrekt im Muffengehäuse angeordnet und abgedichtet, so dass sie mit oder ohne eine ausgehärtete Vergussmasse vorschriftsmässig im Muffengehäuse gehalten ist. Dabei kann das Verbindungsteil als verlorenes Bauteil mit den Schellen verbunden bleiben und in das Muffengehäuse integriert sein. Es ist aber auch denkbar, das Verbindungsteil zu einer geeigneten Zeit abzuziehen und für eine andere Muffenverbindung wieder zu verwenden. Dieser Zeitpunkt kann bereits vor dem Einsetzen in ein Muffengehäuse gegeben sein, während die Schellen auf relativ stabilen Kabeln korrekt fixiert sind. Das Verbindungsteil kann aber auch nach dem Einsetzen der Schellen in eine Gehäuseaufnahme entfernbar sein, z.B. bevor eine zweite Hälfte eines Muffengehäuses geschlossen wird. Die erste Hälfte des Muffengehäuses übernimmt dann zeitweilig die Verbindungsfunktion, wozu sie ausreichend stabil ausgebildet sein muss. Für die Zeit des Aushärtens einer einzubringenden Vergussmasse muss die Gesamtstabilität des Gehäuses dem Sicherheitsgesichtspunkt ausreichend Rechnung tragen. Wird hingegen ein verlorenes Verbindungsteil aus einem ausreichend steifen Material verwendet, kann die Gehäusestabilität entsprechend herabgesetzt werden, weil diese praktisch nur als äussere Umschliessung der Verbindungsstelle und als Gefäss für eine einzugiessende Vergussmasse fungiert.

Die Verbindung z.B von Bügeln und Schellen, wird nach bevorzugten Ausgestaltungen vereinfacht, wenn Schellen und Verbindungsteil mittels lösbarer Befestigungselemente, z.B. Bolzen und entsprechende Bolzenaufnahme oder Rastverbindungselemente aufweisen. Der Verbindungsteil kann im Bereich des Verbindungselementes einen abgekröpften Mittelabschnitt aufweisen, der die erforderlichen Wandabstände sicherstellt.

Bei einer bevorzugten Ausgestaltung hat jede Schelle zwei Schellenhälften, deren gegenseitiger Abstand mittels einer Verbindung, z.B. einer Schraubverbindung, einstellbar ist. Eine Kabeldurchführung der Schelle hat Segmente in beiden Schellenhälften und einen Gesamtquerschnitt, der den Querschnitt des Durchgangskabels unterschreitet. In einer solchen Schelle ist das Durchgangskabel durch Anziehen der Schraubverbindungen unter Verringerung des Abstandes der Schellenhälften einklemm- und gleichzeitig zentrierbar. Bevorzugt sind die Segmente der Schellenhälften einem Teilquerschnitt eines Durchgangskabels bestimmter Abmessungen angepasst, so dass die Schelle maximal dieses bestimmte Durchgangskabel aufnehmen kann. Kleinere Kabelgrössen können unter Verringerung des Abstandes der Schellenhälften eingeklemmt werden.

Praktische Ausgestaltungen sehen vor, dass die Schellenhälften einander zugewandte Trennebenen aufweisen, bzw. überall plane Anlageflächen haben. Durch die planen Anlageflächen wird eine Halterung in einem Gehäuse bei veränderlicher Schellenweite begünstigt.

Die zuvor beschriebenen Schellen und das Verbindungsteil dienen der Fixierung des Durchgangskabels. Zur Fixierung des Abzweigkabels kann eine Schelle eine zu einer Aussenseite offene Nut haben, die in beiden Schellenhälften Nutabschnitte aufweist. Die Nutabschnitte sind jeweils zur Trennfläche ihrer Schelle hin geöffnet. In einem Abstand vom Boden weisen sie eine Breitenverringerung auf. Das Abzweigkabel wird von einer oberen Schelle aufgenommen, die in der Nut der Schelle verankert ist. Die obere Schelle hat zwei obere Schellen hälften, deren gegenseitiger Abstand mittels Schraubverbindungen einstellbar ist und eine Kabeldurchführung mit Segmenten in beiden oberen Schellenabschnitten. Da der Gesamtquerschnitt der Segmente den Querschnitt des Abzweigkabels unterschreitet, ist dieses durch Anziehen der Schraubverbindung in der oberen Schelle fixierbar. Für die Verankerung der Schelle hat jede Hälfte der oberen Schelle einen Fuss mit einer Verbreiterung, wobei der Fuss in einen Nutabschnitt eingreift und die Verbreiterung die Breitenverringerung der Nut hintergreift. Jede obere Schellenhälfte ist also in einer Hälfte der Schelle verankert, wobei die obere Schelle aufgrund der Verbindung der Schellenhälften in der Nut gesichert ist. Bei der Montage wird man zunächst die oberen Schellenhälften in die jeweilige Nut einbringen und die Schellen unter Nutzung eines Verbindungsteils wie z.B. eines Bügels auf dem Durchgangskabel fixieren. Dann wird man das Abzweigkabel in der oberen Schelle festlegen und die solchermassen vormontierte Abzweigung mit einem Gehäuse umgeben.

Bei sämtlichen Schellen wird man bevorzugt die Schraubverbindungen beidseitig der Kabeldurchführungen anordnen, um eine konzentrische Anordnung der Schellenhälften zu erreichen. In Anpassung an die üblichen Kabelquerschnitte werden bevorzugt Segmente mit symmetrischem Querschnitt verwendet, die als Kreissegmente ausgestaltet sein können.

Eine besonders einfache Ausbildung der oberen Schelle sieht vor, die oberen Schellenhälften mit einem teilzylindrischen Mittelabschnitt auszustatten, dessen konkave Seite das Segment der Kabeldurchführung bildet. Ausserdem gehen von den Längskanten des Mittelabschnittes plattenförmige Seitenabschnitte aus, die jeweils eine Bohrung für eine Schraubverbindung aufweisen. Jeweils ein Seitenabschnitt ist als Fuss mit einer vorzugsweise zylindrischen Verbreiterung ausgestattet. Wenn die Seitenabschnitte jedes oberen Schellenabschnittes auf der konvexen Seite des Mittelabschnittes einen stumpfen Winkel einschliessen, können die Schellenhälften vor dem Einsetzen eines Abzweigkabels zur weiteren Montageerleichterung weit auseinandergeklappt werden.

Wenn zwei Abzweigkabel angeschlossen werden, können beide Schellen des Durchgangskabels eine obere Schelle mit jeweils einem Abzweigkabel tragen.

Bei einer weiteren Ausgestaltung kann eine Schelle, die mit einer Nut ausgestattet ist, einen Sicherungskasten mit einem Fuss zur Verankerung aufnehmen. Durch Abnehmen eines Deckels werden Sicherungen in dem Kasten zugänglich. Das Abzweigkabel ist über die Sicherungen mit dem Klemmring verbunden. Wenn jede Leitung des Abzweigkabels mit einer Sicherung verbunden ist, kann ein einphasiger Verbraucher durch blosses Umklemmen am anderen Kabel ende auf eine andere Sicherung gelegt werden. Hierdurch wird ein Ausgraben der Muffe und Auswechseln der Sicherungen vermieden, bis alle Sicherungen verbraucht sind.

Für die Umhüllung kommen ausser einem Muffengehäuse auch andere Konstruktionen in Betracht. Beispielsweise ein Schlauch, der als flexibler Beutel der Fassung des Giessmaterials dienen oder ein Schrumpfschlauch sein kann. Ferner ist denkbar, dass die Umhüllung von dem Giessmaterial selber gebildet wird, das mittels einer abziehbaren Schalung umformt werden kann.

Ein Muffengehäuse umgibt in der Regel die vormontierte Einheit aus elektrischen Gründen in einem Abstand. Es ist vorzugsweise auf den Schellen abgestützt. Dies kann an einer zu einer Trennebene senkrechten Aussenfläche der Schellen geschehen. Der Abstand der übrigen Aussenflächen verändert sich mit der jeweiligen Klemmweite, was durch ein entsprechendes Gehäusespiel ausgeglichen wird. Durch die variable Klemmweite soll ein Abstand von beispielsweise 40 bis 50 mm ausgeglichen werden. Geeignete Dichtungen stellen sicher, dass über den gesamten Klemmbereich hinweg eine ausreichende Abdichtung erreicht wird. Vorteilhaft sind jedoch den Aussenflächen der Schellen parallel zu ihren Trennebenen Anschläge im Gehäuse zugeordnet, an denen die Schellen bei Aufnahme des Kabels mit maximalem Durchmesser anliegen. Durch die Anschläge kann sichergestellt werden, dass die Abzweigung auch bei Anliegen der Schellen noch einen ausreichenden Abstand zur Gehäuseinnenwand aufweist.

Das Muffengehäuse ist bevorzugt vertikal in zwei Gehäuseseitenteile geteilt, die von beiden Seiten um die vormontierte Einheit aus Durchgangskabel, Verbindungselement, gegebenenfalls Abzweigkabel und Schelle mit Verbindungsteil legbar sind. Bevorzugt hat das Muffengehäuse oder die sonstige Umhüllung am Scheitel eine Einfüllöffnung für Isoliermaterial wie Giessharz, die ein vollständiges Ausfüllen des Gehäuses mit Isoliermaterial garantiert.

Der Sicherungskasten ist nach einer Ausgestaltung aussen am Muffengehäuse angeordnet, damit die Sicherungselemente gut zugänglich sind und ein Eingriff keine Oeffnung des Gehäuses erfordert. Zur besseren Raumausnutzung kann der Sicherungskasten auf einer Aussenstufe in einem Stirnbereich des Muffengehäuses angeordnet sein. Bei einer Muffenverbindung mit nur einer Abzweigung ist die Aussenstufe raumsparend oberhalb der Stelle realisierbar, die keine obere Schelle für das Abzweigkabel trägt.

Für eine nachträgliche Isolierung der Kabelverbindungen zwischen Muffengehäuse und Sicherungskasten kann der Abstandsbereich zwischen diesen Bauteilen unter Anwendung einer blendenartigen Giesshilfe mit Giessharz ausfüllbar sein. Die Aussenstufe kann ausbrechbare Oeffnungen aufweisen, durch die Giessharz infolge des Ausgiessens des Muffengehäuses zwischen Giesshilfe und Aussenstufe gelangen kann. Die Oeffnungen können auch zur Durchführung eines Anschlusskabels und des Fusses des Sicherungskastens dienen, der an einer Schelle eine weitere Fixierung erhält.

Weitere Einzelheiten und Vorteile der Erfindung ergeben sich aus der nachfolgenden Beschreibung von Ausführungsbeispielen anhand der Zeichnung. In dieser zeigen:
- Fig.1: Schellen, Bügel und Sicherungskasten zur Vormontage eines Abzweigkabels an einem Durchgangskabel im perspektivischen Sprengbild;
- Fig. 2: ein Muffengehäuse für ein vormontiertes Durchgangskabel mit Abzweigkabel in perspektivischer Seitenansicht;
- Fig. 3: eine Giesshilfe mit Dichtung für einen Sicherungskasten in perspektivischer Seitenansicht;
- Fig. 4: eimem Abschlussdeckel für Sicherungskasten in perspektivischer Seitenansicht, und
- Fig. 5: ebenfalls in perspektivischer Seitenansicht einen Giessöfffnungsdeckel mit Giessöffnung.

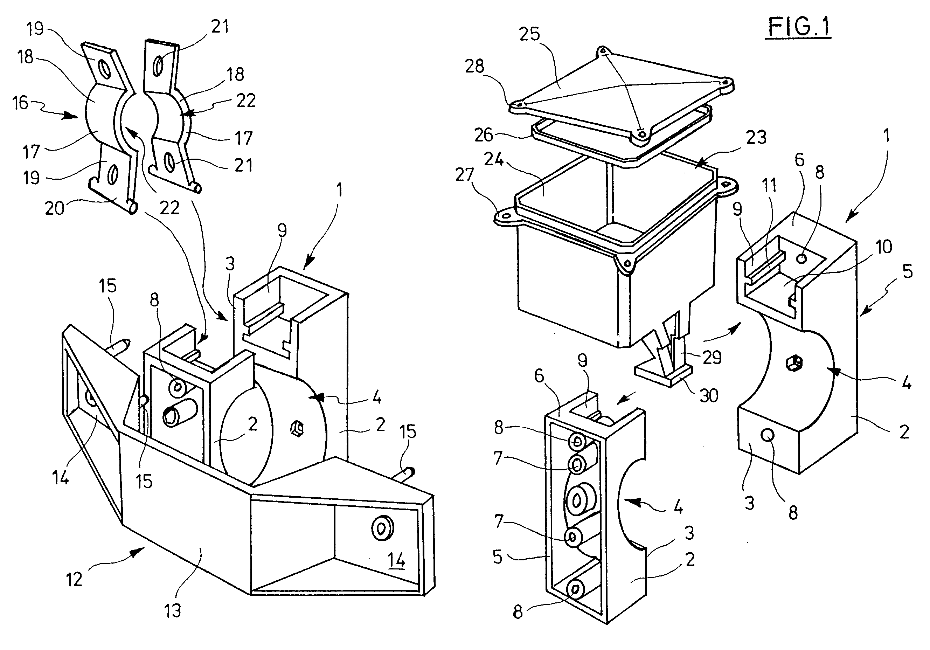

Gemäss Fig. 1 hat die Muffenverbindung zwei identisch ausgebildete Schellen 1 für ein Durchgangskabel mit einem Durchmesserbereich von beispielsweise 40 bis 50 mm. Die Schellen 1 haben Schellenhälften 2, die ebenfalls identisch ausgebildet sind und einander zugewandte Trennebenen 3 aufweisen. In den Trennebenen 3 sind Segmente 4 einer Kabeldurchführung mit kreiszylindrischem Querschnitt und teilzylindrischer Innenfläche ausgebildet.

Die Schellen 1 weisen an ihrem Umfang und an ihren Stirnseiten plane Aussenflächen auf, die senkrecht aufeinander ausgerichtet sind. Die vertikalen Aussenflächen 5 und die obere Aussenfläche 6 haben besondere Ausgestaltungen, auf die nachfolgend eingegangen wird.

Im Inneren des ebenen Randes der vertikalen Aussenfläche 5 sind Bolzenaufnahmen 7 angeordnet. Ausserdem befinden sich dort Durchführungen 8 für Schraubverbindungen, die an den einander zugewandten Seiten der Schellenhälften 2 münden.

In der oberen Aussenfläche 6 der Schellen 1 ist ein Nutabschnitt 9 ausgebildet, der sich mit einem Abstand von den vertikalen Aussenflächen 5 in beiden Schellenhälften 2 erstreckt. Die Nutabschnitte 9 sind zu den Trennebenen 3 der Schellenhälften 2 hin geöffnet. In einem Abstand von ihrem Nutboden 10 sind in beiden Flanken der Nutabschnitte 9 sich längs der Nut erstreckende Stege 11 angeordnet, die eine Breitenverringerung der Nut bewirken.

Den beiden Schellen 1 ist ein Verbindungsteil zugeordnet, der hier als Bügel 12 dargestellt ist und der einen abgekröpften Mittelabschnitt 13 mit konsolenartigen Seitenabschnitten 14 an beiden Seiten aufweist. Die Seitenabschnitte 14 haben den Schellen 1 zugewandt ebene Flächen, in denen jeweils zwei Bolzen 15 angeordnet sind, die in die Bolzenaufnahmen 7 einer Schellenhälfte 2 passen.

Für Abzweigkabel in einem Durchmesserbereich von beispielsweise 18 bis 25 mm ist ferner eine obere Schelle 16 vorgesehen. Die obere Schelle 16 besteht aus zwei übereinstimmend ausgebildeten Schellenhälften 17 mit einem teilzylindrischen Mittelabschnitt 18, der an beiden Längskanten plattenförmige Seitenabschnitte 19 trägt. Der untere Seitenabschnitt 19 bildet einen Fuss mit einer zylindrischen Verbreiterung 20. Dieser Fuss kann die Nut 9 der Schellen 1 durchgreifen, wobei die Verbreiterung 20 zwischen den Steg 11 und den Nutboden 10 passt. In den Seitenabschnitten 19 sind jeweils Bohrungen 21 für eine Schraubverbindung ausgebildet.

Die teilzylindrischen Mittelabschnitte 18 der oberen Schelle 16 bilden Segmente 22 einer Kabeldurchführung mit kreisförmigem Querschnitt und zylindrischer Innenfläche. Wie bei den Segmenten 4 der Schellen 1 ist der Querschnitt jedes Segmentes 22 kleiner als die Hälfte des Querschnittes des maximal aufzunehmenden Kabels.

Mit Vorteil können die Flächen dieser Segmente mit federnden Zungen versehen sein, welche fabrikationsbedingte Durchmesserabweichungen des Kabels ausgleichen, sodass in der geschlossenen Schelle auch dünnere Kabel stets korrekt zentriert werden. Die Fixierung erfolgt dann ausschliesslich durch die Zungen wobei dabei die Ausssenabmessungen des Schelle unverändert bleiben.

Schliesslich ist dem Nutabschnitt 9 der in der Zeichnung rechten Schelle 1 ein Sicherungs- oder Kabelabzweigungskasten 23 zugeordnet. Dieser nimmt einen rechteckigen Kasten 24 mit einem oberseitigen Deckel 25 auf, wobei zwischen dem oberem Rand des Kastens 24 und dem Deckel eine Dichtung 26 angeordnet ist. Kasten 24 und Deckel 25 sind an laschenartigen Vorsprüngen 27, 28 miteinander verschraubbar.

Unten hat der Kasten 23 einen Fuss 29, der mit einem Stegbereich den Nutabschnitt 9 von oben durchgreift und mit einer Verbreiterung 30 am unteren Ende die zwischen den Stegen 11 und dem Nutboden 10 gebildete Aufnahme hintergreifen kann.

Die Schellen 1, 16, der Bügel 12 und die Kästen 23,24 werden bevorzugt aus Kunststoff hergestellt.

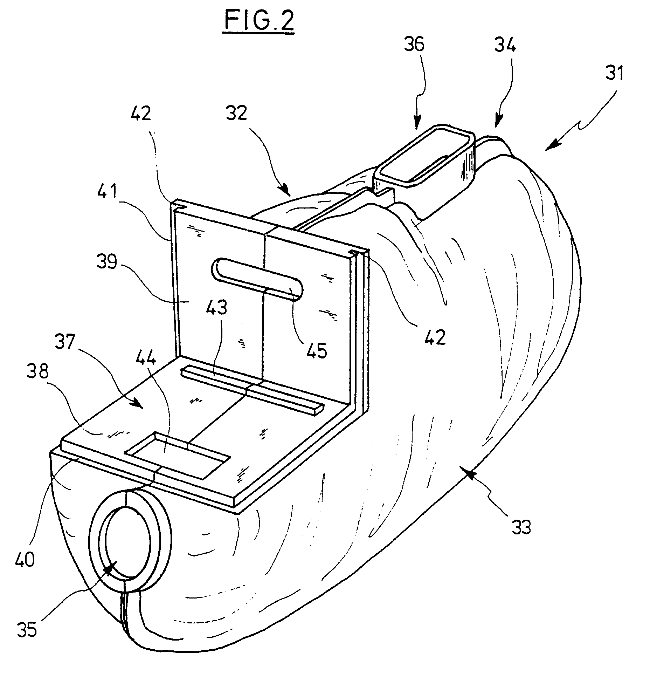

Ein dazugehöriges Muffengehäuse 31 gemäss Fig. 2 besteht aus zwei Gehäuseseitenteilen, 32, 33, die an einer vertikalen Teilungsebene 34 zusammengefügt sind. Die Wandungen des Gehäuses sind sehr dünn, beispielsweise aus Kunststoff ausführbar, da die vormontierte Einheit aus den oben beschriebenen Elementen wie vorbeschrieben die wesentlichen Kräfte aufnimmt.

An den Stirnenden hat das Muffengehäuse Oeffnungen für das Durchgangskabel, wobei in der Zeichnung nur eine Oeffnung 35 am vorderen Stirnende sichtbar ist. Im hinteren, in Fig. 2 nicht sichtbaren Stirnende sind zwei Oeffnungen angeordnet, wovon eine für das Durchgangskabel und die andere für ein Abzweigkabel vorgesehen ist. Da die Anbringung eines Abzweigkabels optional ist, hat die dafür vorgesehene Oeffnung einen ausbrechbaren Verschluss.

Im Scheitel bereich ist das Muffengehäuse 31 mit einer Einfüllöffnung 36 für Giessharz versehen.

Im Oberbereich des vorderen Stirnendes ist an das Muffengehäuse 31 eine Aussenstufe 37 mit einer horizontalen Wand 38 und einer vertikal emporragenden Wand 39 geformt. Beim dargestellten Beispiel ist seitlich neben der horizontalen Wand 38 ein Absatz 40 ausgebildet und an den Längsseiten der vertikalen Wand 39 befindet sich ein Absatz 41. Der Absatz 41 erstreckt sich an beiden Seiten der verikalen Wand 39 in eine Nut 42 hinein.

Auf der horizontalen Wand 38 der Stufe ist neben der vertikalen Wand 39 eine zu dieser parallele Rippe 43 angeordnet. In der horizontalen Wand 38 und der vertikalen Wand 39 befinden sich jeweils ausbrechbare Oeffnungen 44, 45, die zum Hohlraum der Muffe 31 hin geöffnet werden können.

Die Aussenstufe 37 ist so bemessen, dass ihr ein Sicherungskasten 23 zugeordnet werden kann, indem er mit seinem Fuss 39 durch die ausbrechbare Oeffnung 44 zur Schelle 1 geführt wird und mit seinem Boden auf der Rippe 43 ruht.

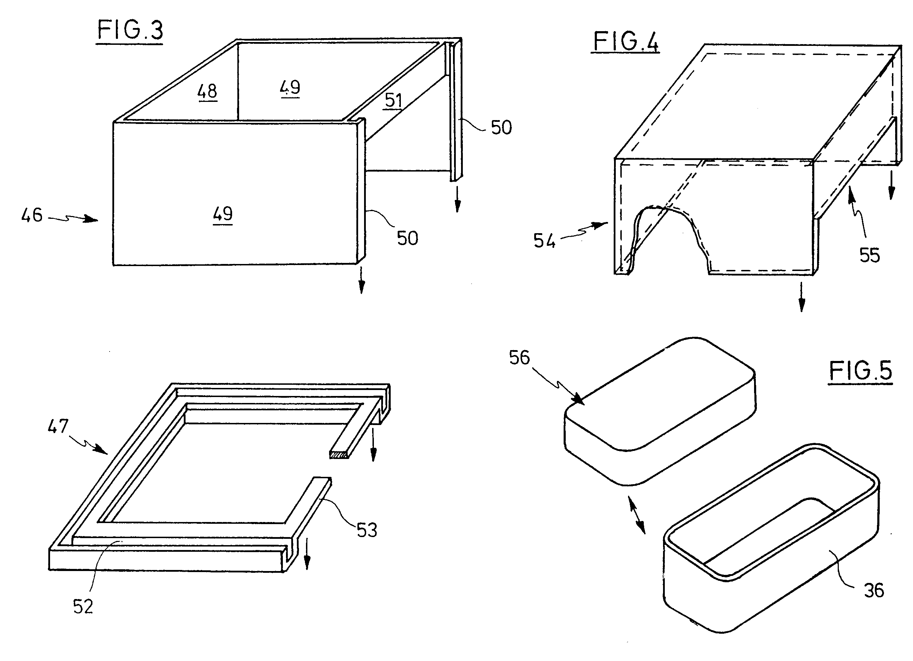

Ausserdem ist der Aussenstufe 37 eine Giessblende 46 mit Dichtung 47 gemäss Fig. 3 zugeordnet. Die Giessblende 46 ist ein im wesentlichen U-förmiger Körper mit einer Basis 48 und zwei Schenkeln 49. Zur Versteifung sind die Schenkel 49 neben ihren Schenkelenden 50 von einem Steg 51 überbrückt. Die Schenkelenden 50 sind so nach innen gebogen, dass ihre einander zugewandten Wandabschnitte in die Nuten 42 des Muffengehäuses 31 von oben einschiebbar sind. Unter Zwischenlage der Dichtung 47 stützt sich dann der untere Rand der Giesshilfe 46 am Absatz 40 neben der Aussenstufe 37 ab. Dafür ist die Dichtung 47 so profiliert, dass sie zumindest den Absatz 40 und den Rand der horizontalen Wand 38 überdeckt und eine nach oben geöffnete Nut 52 für die Unterkante der Giessblende 46 aufweist. Auch die Dichtung 47 ist mit einem Ueberbrückungssteg 53 ausgestattet, der hinter der Rippe 43 der Aussenstufe 37 angeordnet werden kann und die Dichtungsanordnung stabilisiert. Die auf der Aussenstufe 37 plazierte Giessblende 46 schliesst den Sicherungskasten 23 unter Bildung eines Spaltes ein.

Für einen zusätzlichen oberseitigen Abschluss des Dichtungskastens ist eine Haube 54 gemäss Fig. 4 vorgesehen, die den oberen Rand der Giesshilfe und die Rückseite der vertikalen Wand 39 der Aussenstufe 37 übergreift. Für das Uebergreifen der vertikalen Wand 39 ohne Kollision mit dem Körper des Muffengehäuses hat die zugeordnete Wand der Haube 54 eine Aussparung 55.

Schliesslich ist gemäss Fig. 5 noch ein Giessöffnungsdeckel 56 vorgesehen, der von oben in die Giessöffnung 36 einsetzbar ist und darin einen leichten Pressitz aufweist. Giesshilfe 46 und Haube 54 können aus einem leichten aber verhältnismässig starren Kunststoff gefertigt werden. Für die Dichtung 47 bzw. den Giessöffnungsdeckel 56 wird ein etwas elastischerer Kunststoff vorzuziehen sein.

Mit den vorstehenden Elementen kann eine Muffenverbindugn wie folgt zusammengebaut werden:
Zunächst wird ein Durchgangskabel bereichsweise abgemantelt und mit einem Verbindungsteil, z.B. einem Klemmring versehen. Danach wird die obere Schelle 16 mit ihrem Fuss 19 in einer Hälfte 2 der (in der Zeichnung) linken Schelle 1 verankert. Hierzu wird der Fuss 19 durch eine Oeffnung der Nut 9 in der Trennebene 3 eingeschoben. Die solchermassen vormontierte Schelle 1, 16 wird auf der Ummantelung des Durchgangskabels vormontiert. Dies erfolgt auf der Seite, auf der das Abzweigkabel vom Klemmring abgeführt werden soll. Zur Vormontage werden Verschraubungen durch die Durchführungen 8 geführt und leicht angezogen, so dass die Schelle 1 noch auf dem Durchgangskabel beweglich ist.

Danach wird die rechte Schelle 1 vormontiert, indem der Sicherungskasten in die Nut 9 einer Hälfte 2 eingeschoben wird. Danach wird die rechte Schelle 1 auf dem anderen ummantelten Abschnitt des Durchgangskabels vormontiert, wobei wiederum Schrauben in den Durchführungen 8 so angezogen werden, dass auch die Schelle 1 noch auf dem Durchgangskabel verschiebbar ist.

Anschliessend wird der Bügel 12 mit den beiden Schellen 1 verbunden. die Verbindung der beiden Seitenabschnitte 14 mit den Schellen 1 kann nacheinander erfolgen, wenn das Durchgangskabel entsprechend gebogen wird. Dann sind die Schellen 1 entlang des Durchgangskabels in eine optimale Position zu rücken und werden anschliessend in dieser Lage fixiert.

Danach werden die oberen Schellenhälften 17 der oberen Schelle 16 auseinandergeklappt und zwischen diese von oben ein Abzweigkabel eingeführt. Das Abzweigkabel wird dann mit dem Klemmring verbunden. Nach optimaler Parallelausrichtung des Abzweigkabels zum darunterliegenden Durchgangskabel werden Schraubverbindungen in den Bohrungnen 21 der oberen Schelle 16 angezogen.

Falls der Sicherungskasten 23 benutzt werden soll, wird das Abzweigkabel vor dem Fixieren in der oberen Schelle 16 in diesen Kasten geführt und mit dort befindlichen Sicherungssockeln verdrahtet. Weitere Kontakte der Sicherungssockel werden zum Klemmring geführt.

Anschliessend wird die vormontierte Abzweigung mit dem zweigeteilten Muffengehäuse 31 umgeben. Bei Verwendung eines Sicherungskastens werden zuvor die ausbrechbaren Oeffnungen 44, 45 durch Ausbrechen der sie verschliessenden Wände geöffnet. Beim Schliessen des Muffengehäuses 31 um die vormontierte Einheit wird der Fuss 30 des Sicherungskastens 23 von der Oeffnung 44 aufgenommen und der Sicherungskasten ist oberhalb der Aussenstufe 37 angeordnet.

Das Muffengehäuse 31 hat in den endseitigen Oeffnungen 35 fixierte Dichtungsabschnitte, wobei der Längsabstand der Dichtungsabschnitte den Längsabstand der Schellen 1 überschreitet. Infolgedessen liegen die Dichtungsabschnitte an dem Durchgangskabel an. Auch dem Abzweigkabel sind Dichtungsabschnitte der zugehörigen Gehäuseöffnung zugeordnet.

Das Gehäuse hat Auflageflächen für die obere Auflagefläche 6 und eine parallele untere Fläche der Schellen 1. Für die vertikalen Aussenflächen der Schellen 1 sind in einem Maximalabstand Anschläge vorgesehen, die das Muffengehäuse 31 in einem erforderlichen Mindestabstand von der vormontierten Einheit halten.

Bei der weiteren Montage wird die Giesshilfe 46 unter Zwischenlage der Dichtung 47 auf die Stufe 37 gesetzt, wobei sie in Anlage an der Dichtung mit dem Muffengehäuse 31 durch die Eingiessöffnung 36 mit Vergussmasse auffüllbar. Diese fliesst durch die Oeffnungen 44, 45, in die Spalte zwischen Aussenseite des Muffengehäuses 31 und Sicherungskasten 23 hinein. Es wird soviel Vergussmasse eingefüllt, bis sie knapp unter den Deckel 25 des Sicherungskastens 23 gestiegen ist. Sämtliche Hohlräume sind ausgefüllt, wenn das Vergussmaterial die Eingiessöffnung 36 erreicht bzw. unterhalb des Deckels 25 angelangt ist. Die Giessöffnung ist so angelegt, dass ein Vergiessen des Verbindungselementes nicht möglich ist und damit Luftblasen im Vergussmaterial im Bereich stromführender Teile ausgeschlossen sind. Das dezentrale, nach links verschobene Eingiessen gewährleistet gute Luftverdrängung.

Nach dem Vergiessen des Giessharzes wird die Eingiessöffnung 36 mittels des Deckels 56 geschlossen. Der Sicherungskasten kann zusätzlich mit der Haube 54 abgedeckt werden.

Wenn zwecks Sicherungsaustauschs die Muffe freigelegt worden ist, können Verunreinigungen und Feuchtigkeit von der Haube 54 entfernt werden. Dann wird die Haube abgezogen und der Deckel 25 des Sicherungskastens 23 liegt frei. Danach kann der Deckel 25 losgeschraubt und elektrische Verbindungen freigelegt werden, ohne dass Schmutz oder Feuchtigkeit in den Sicherungskasten 23 oder gar das Muffengehäuse 31 gelangen können.

Das Abzweigkabel ist in der Regel ein Hausanschluss, der keine Absicherung erfordert. Dann bleiben die Oeffnungen 44, 45 verschlossen. Es kann aber auch zu einer öffentlichen Beleuchtungseinrichtung führen und wird dann mit einem Sicherungskasten ausgestattet sein.

## Patentansprüche

1. Muffenverbindung eines Durchgangkabels, mit einem Abzweigkabel, einem Verbindungselement, das auf einem abgemantelten Abschnitt des Durchgangskabels sitzt und dessen Leiter kontaktiert und an welches das Abzweigkabel angeschlossen ist, mindestens einer Schelle (1), die auf einem ummantelten Abschnitt des Durchgangskabels seitlich des Verbindungselementes angeordnet ist und Durchgangskabel sowie Abzweigkabel in ihrer gegenseitigen Lage fixiert, ferner mit einer Umhüllung (31), die mindestens Verbindungselement und Schelle umgibt und eine Schalung für eine in den Hohlraum der Umhüllung eingegossene Vergussmasse bildet, dadurch gekennzeichnet, dass eine vormontierte Einheit aus Durchgangskabel, Verbindungselement, Abzweigkabel und Schelle (1, 16) zumindest teilweise von der Umhüllung (31) aufgenommen ist.

2. Muffenverbindung nach Anspruch 1, dadurch gekennzeichnet, dass zwei Schellen (1) an verschiedenen Seiten des Verbindungselementes vorgesehen sind, die durch einen starren Verbindungsteil (12), z.B. einen am Verbindungselement seitlich vorbeigeführten Bügel, in einem bestimmten Abstand voneinander positionierbar sind.

3. Muffenverbindung nach Anspruch 1 oder 2, dadurch gekennzeichnet, dass die Schellen (1) in einen entsprechenden Abstand voneinander aufweisende Schellenaufnahmen der Umhüllung (31) eingesetzt sind.

4. Muffenverbindung nach Anspruch 2 oder 3, dadurch gekennzeichnet, dass Schellen (1) und Verbindungsteil (12) mittels lösbarer Befestigungselemente (7, 15) miteinander verbindbar sind.

5. Muffenverbindung nach Anspruch 4 , dadurch gekennzeichnet, dass die Befestigungselemente Bolzen (15) und entsprechende Bolzenaufnahmen (7) oder Rastverbindungselemente haben.

6. Muffenverbindung nach einem der vorgehenden Ansprüche, dadurch gekennzeichnet, dass der Verbindungsteil (12) einen abgekröpften Mittelabschnitt (13) aufweist.

7. Muffenverbindung nach einem der vorhergehenden Ansprüche, dadurch gekennzeichnet, dass jede Schelle (1) zwei Schellenhälften (2) aufweist, die Schellenhälften Verbindungen, z.B. Schraubverbindungen haben, mittels derer ihr gegenseitiger Abstand einstellbar ist, dass eine Kabeldurchführung der Schelle Segmente (4) in beiden Schellenhälften (2) hat, und dass der Gesamtquerschnitt der Segmente den Querschnitt des Durchgangskabels unterschreitet.

8. Muffenverbindung nach Anspruch 7, dadurch gekennzeichnet, dass die Segmente (4) einem Teilquerschnitt eines Durchgangskabels bestimmter Abmessung angepasst sind.

9. Muffenverbindung nach Anspruch 7 oder 8, dadurch gekennzeichnet, dass die Schellenhälften (2) einander zugewandte Trennebenen (3) haben.

10. Muffenverbindung nach einem der Ansprüche 7 bis 9, dadurch gekennzeichnet, dass die Schellenhälften (2) plane Aussenflächen (5, 6) haben.

11. Muffenverbindung nach einem der Ansprüche 7 bis 10, dadurch gekennzeichnet, dass mindestens eine Schelle (1) eine zu einer Aussenseite hin offene Nut (9) hat, die in einem Abstand vom Nutboden (10) eine Breitenverringerung (11) aufweist, und die beiden Schellenhälften Abschnitte der Nut (9) haben, die zur Trennfläche (3) der Schellenhälften (2) hin geöffnet sind, dass in der Nut (9) eine das Abzweigkabel aufnehmende obere Schelle (16) verankert ist, die zwei obere Schellenhälften (17) aufweist, welche Schraubverbindungen haben, mittels derer ihr gegenseitiger Abstand einstellbar ist, wobei eine obere Kabeldurchführung der oberen Schelle Segmente (22) in beiden oberen Schellenhälften hat, der Gesamtquerschnitt der Segmente den Querschnitt des Abzweigungskabels unterschreitet, und jede Schellenhälfte (22) einen Fuss (19) mit einer Verbreiterung (20) aufweist, wobei der Fuss in die Nut (9) eingreift und die Verbreiterung deren Breitenverringerung (11) hintergreift.

12. Muffenverbindung nach einem der Ansprüche 7 bis 10, dadurch gekennzeichnet, dass mindestens eine Schelle (1) eine zu einer Aussenseite hin offene Nut (9) hat, die in einem Abstand vom Nutboden (10) eine Breitenverringerung (11) aufweist, und die beiden Schellenhälften Abschnitte der Nut (9) haben, die zur Trennfläche (3) der Schellenhälften (2) hin geöffnet sind, dass in der Nut (9) eine das Abzweigkabel aufnehmende obere Schelle (16) verankert ist, die zwei obere Schellenhälften (17) aufweist, welche Schraubverbindungen haben, mittels derer ihr gegenseitiger Abstand einstellbar ist, wobei eine obere Kabeldurchführung der oberen Schelle Segmente (22) in beiden oberen Schellenhälften hat, in welchen Segmenten federnde Zungen zum Ausgleich unterschiedlicher Kabeldurchmesser und zum Zentrieren eines Kabels in der geschlossenen, oberen Schelle aufweist, und dass jede Schellenhälfte (22) einen Fuss (19) mit einer Verbreiterung (20) aufweist, wobei der Fuss in die Nut (9) eingreift und die Verbreiterung deren Breitenverringerung (11) hintergreift.

13. Muffenverbindung nach einem der Ansprüche 7 bis 12, durch gekennzeichnet, dass die Schraubverbindungen beidseitig der Kabeldurchführungen der Schellen (1, 16) angeordnet sind.

14. Muffenverbindung nach einem der Ansprüche 7 bis 12, dadurch gekennzeichnet, dass die Segmente (4, 22) übereinstimmende Querschnitte haben.

15. Muffenverbindung nach einem der Ansprüche 7 bis 14, dadurch gekennzeichnet, dass die Segmente (4, 22) Kreissegmente sind.

16. Muffenverbindung nach einem der Ansprüche 11 bis 15, dadurch gekennzeichnet, dass die oberen Schellenhälften (17) jeweils einen teilzylindrischen Mittelabschnitt (18) aufweisen, dessen konkave Seite das Segment (22) der Kabeldurchführung bildet, dass von den Längskanten des Mittelabschnittes plattenförmige Seitenabschnitte (19) ausgehen, die jeweils eine Bohrung (21) für eine Schraubverbindung aufweisen, und dass jeweils ein Seitenabschnitt (19) als Fuss mit einer Verbreiterung (20) am unteren Ende ausgestaltet ist.

17. Muffenverbindung nach Anspruch 16, dadurch gekennzeichnet, dass die Verbreiterung (20) zylindrisch ist.

18. Muffenverbindung nach Anspruch 16 oder 17, dadurch gekennzeichnet, dass die Seitenabschnitte (19) jeder oberen Schellenhälfte (17) auf der konvexen Seite des Mittelabschnittes (18) einen stumpfen Winkel einschliessen.

19. Muffenverbindung nach einem der vorhergehenden Ansprüche, dadurch gekennzeichnet, dass eine Schelle (1) eine zu einer Aussenseite hin offene Nut (9) hat, die in einem Abstand vom Boden (10) eine Breitenverringerung (11) aufweist, und die in beiden Schellenhälften (2) Nutabschnitte hat, die zur Trennfläche (3) der Schellenhälften hin geöffnet sind, dass in der Nut (9) ein Sicherungskasten (23) verankert ist, der einen die Nut durchgreifenden und mit einer Verbreiterung (30) deren Breitenverringerung (11) hintergreifenden Fuss (29) hat, und einen am Fuss ausserhalb der Schelle befestigten Kasten (24) aufweist.

20. Muffenverbindung nach Anspruch 19, dadurch gekennzeichnet, dass der Kasten (24) einen abnehmbaren Deckel (25) mit einer Dichtung (26) hat.

21. Muffenverbindung nach Anspruch 19 oder 20, dadurch gekennzeichnet, dass das Abzweigkabel über im Sicherungskasten (23) angeordnete Sicherungen mit dem Verbindungselement, z.B. einem Klemmring verbunden ist.

22. Muffenverbindung nach einem der vorhergehenden Ansprüche, dadurch gekennzeichnet, dass die Umhüllung ein Schlauch, ein Wickelmaterial oder ein flexibles oder starres Gehäuse (31) ist.

23. Muffenverbindung nach Anspruch 22, dadurch gekennzeichnet, dass die Umhüllung ein rohrförmiges Muffengehäuse (31) ist, das die vormontierte Einheit mit einer Aufnahme in einem Abstand umgibt.

24. Muffenverbindung nach Anspruch 23, dadurch gekennzeichnet, dass das Muffengehäuse (31) auf den Schellen (1) abgestützt ist.

25. Muffenverbindung nach einem der Ansprüche 22 bis 24, dadurch gekennzeichnet, dass sich das Muffengehäuse (31) auf zu ihrem Trennebenen (3) senkrechten Aussenflächen (6) der Schellen (2) abstützt.

26. Muffenverbindung nach einem der Ansprüche 22 bis 25, dadurch gekennzeichnet, dass den parallel zu den Trennebenen (3) gerichteten Aussenflächen (5) der Schellen (1) Anschläge im Muffengehäuse (31) zugeordnet sind, an denen die Schellen bei Aufnahme des Kabels mit maximalem Durchmesser anliegen.

27. Muffenverbindung nach einem der Ansprüche 22 bis 26, dadurch gekennzeichnet, dass das Muffengehäuse (31) vertikal in zwei Gehäuseseitenteile (32, 33) geteilt ist.

28. Muffenverbindung nach einem der Ansprüche 22 bis 27, dadurch gekennzeichnet, dass das Muffengehäuse (31) an seinem Scheitel eine Einfüllöffnung (36) für Vergussmasse, z.B. Giessharz hat.

29. Muffenverbindung nach einem der vorhergehenden Ansprüche, dadurch gekennzeichnet, dass aussen am Muffengehäuse (31) ein Sicherungskasten (23) angeordnet ist.

30. Muffenverbindung nach Anspruch 29, dadurch gekennzeichnet, dass der Sicherungskasten (23) auf einer Aussenstufe (37) in einem Endbereich des Muffengehäuses (31) angeordnet ist.

31. Muffenverbindung nach Anspruch 28, dadurch gekennzeichnet, dass eine im wesentichen U-förmige Giessblende (46) mit gegen die emporragende Wand der Aussenstufe (37) stossenden Schenkelenden (50) auf die horizontale Wand (38) der Aussenstufe (37) setzbar und ein zwischen Sicherungskasten (23) und Giesshilfe (46) sowie Aussenstufe (37) verbleibender Spalt bis zum Deckel (25) des Sicherungskastens mit Vergussmasse, z.B. Giessharz ausfüllbar ist.

32. Muffenverbindung nach Anspruch 31, dadurch gekennzeichnet, dass die Umhüllung (31) in der Aussenstufe (37) ausbrechbare Oeffnungen (44, 45) für eine Durchführung des Fusses (29) des Sicherungskasten (23), der Abzweigleitung und/oder für einen Durchtritt von Vergussmasse, z.B. Giessharz hat.

33. Muffenverbindung nach einem der vorhergehenden Ansprüche, dadurch gekennzeichnet, dass zwei Dichtungen jeweils neben einer Schelle auf ummantelten Abschnitten des Durchgangskabels sitzen, wobei ggfs. eine Dichtung oder eine weitere Dichtung auf dem Abzweigkabel sitzt.
